(19) Europäisches Patentamt
European Patent Office
Office européen des brevets

(11) **EP 1 056 053 A2**

(12) **EUROPEAN PATENT APPLICATION**

(43) Date of publication:
**29.11.2000 Bulletin 2000/48**

(51) Int. Cl.[7]: **G07B 17/02**, **H04L 9/32**

(21) Application number: **00201831.5**

(22) Date of filing: **25.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.05.1999 US 318816**

(71) Applicant: **Certicom Corp.**
**Mississauga, Ontario L4W 5L1 (CA)**

(72) Inventor: **Vanstone, Scott A.**
**Waterloo, Ontario N2T 2H4 (CA)**

(74) Representative:
**de Vries, Johannes Hendrik Fokke**
**De Vries & Metman**
**Overschiestraat 180**
**1062 XK Amsterdam (NL)**

(54) **Efficient digital signatures for mail systems**

(57) This invention relates to a method for generating a digital signature. The method comprises the steps of generating a short term private key, computing a short term public key derived from the private key, computing a first signature component derived from the short term public key, computing an intermediate signature component derived from the first signature component as a function of the number of bits in a binary representation of the first signature component, computing a second signature component, derived from the short term private key, the message M and the intermediate signature component; transmitting the second and intermediate signature components as a signature for the message M. and encoding the signature onto a digital postage mark for application to a postal item.

FIG. 1

## Description

This invention relates to mail processing systems and more particularly, to efficient cryptographic integrity validation codes incorporated in a digital postmark.

## BACKGROUND OF THE INVENTION

Mail is a classic application of value printing. Although it can be freely deposited into a carrier distribution system, most carriers require either prepayment for deposited mail items or some indication that the indication that the payment will be made after the mail has been deposited into the carrier system. The prepayment or indication of future payment is normally evidenced on the mail item in the form of a postal indicia sometimes called indicium, or simply a postage mark. The postage mark normally incorporates some information such as an encoded postage amount and a unique identification, which makes it verifiable by the post office. The majority of modem postage payment evidencing systems employs a computer-controlled digital printing means. In particular, to emphasize this fact, the postage mark is frequently called a digital postage mark (DPM).

A DPM is created by a computer control device and then printed on a mail item in the form of specially designed bar code or OCR machine-readable representation. The type of DPM selected depends on the amount of data that must be present in the DPM. The United States Postal Services (USPS) has proposed a distributed trusted system known as the Information-Based Indicia Program (IBIP). The IBIP requires printing large, high density, two-dimensional (2-D) bar codes on mail items. Because of the limited space available on a mail item, such two dimensional DPM's however impose certain physical restrictions on the printing equipment and the amount of information that can be encoded in the DPM. For example in United States Patent No. 5,801,944 a system and method for optimally printing postage indicia directly on documents which overcomes some of these physical limitations is described.

Another factor that determines the size of the DPM is the level of security required for the DPM. Security of the DPM is based on a cryptographic integrity validation code (CIVC) that is included in the DPM together with other data. An example of an effective CIVC is a digital signature. A digital signature of a message $m$ is a number dependant on some secret known only to the signor, and additionally, on the content of the message being signed. Signatures must be verifiable. If dispute arises as to whether a party signed a document an unbiased third party should be able to resolve the matter equitably, without requiring access to the signors secret information (private key).

In general for a public key cryptographic system, verification of a signature is performed by the verifier obtaining the signors public key $P_U$ and using it to decrypt the signature data to authenticate the signor. Authentication of the signors public key $P_U$ is accomplished by public key certificates, which contain the signors public key together with a digital signature of the public key. This signature is normally computed by a trusted third party such as a certification authority (CA) using its private key. The CA then publishes its public key. Thus, the certificate provides explicit authentication of the signors public key $P_U$ that must be used to verify the authenticity and data integrity of the signature (DPM).

The certificate may be included in the DPM itself or stored in a database accessible to the verifier and referenced by a unique certificate identification code. This code is typically a unique identification number of the device or process, which was used to compute the CIVC and the DPM. Such a public key cryptographic system for use in a postage system is described in United States Patent No. 5,796,841 entitled "Secure User Certification for Electronic Commerce Employing Value Metering System".

The CIVC and other data that may be included in the DPM are subject to a set of differing requirements.

One of the problems with using current signature schemes to compute the CIVC is the size limitation. Specifically, it is desirable to keep the size of a CIVC to a minimum due to severe limitations in the physical space available for printing the DPM on a mail item. Furthermore, the size of the DPM is constrained by the need to scan and interpret the DPM reliably. However, the CIVC must also possess cryptoanalytic strength above a commonly accepted threshold, for example, $2^{80}$ operations (i.e. the best know algorithm to find a secret key using a publicly available set of plain texts and cipher texts requires at least $2^{80}$ operations).

An increase in cryptoanalytic strength should not significantly increase the CIVC size to maintain the required level of cryptoanalytic strength while computational performance of the CIVC generation and verification processes should be equivalent to the performance of the fastest mail generation and processing equipment currently available. In practice, this is equivalent to generating 10 CIVCs per second and verifying up to 20 times per second.

It is desirable that the CIVC and the DPM contain all the information required for verification. It is desirable to make the verifier perform the verification process without continuous access to external data. In other words, the verifier should be able to determine the consistency of the information in the DPM based on the DPM data.

The verifier should be able to perform additional functions based on the DPM information, which may be used to reduce the risk of misusing the carrier's funds. These additional functions may include verification of certain parameters included in the DPM against predefining criteria stored in the verifier or present in the DPM. For example, certain devices may have the privilege to create and print value-evidencing information associated with an expiration date or may have restricted privileges to print value above certain thresholds or other similar restrictions.

Furthermore, the cost of the entire system should be affordable to enable broad access to both mailers and posts.

In addition, a sound value evidencing system based on principles of cryptographic security should be supported by an appropriate and effective infrastructure. In particular, key management systems need to be established between manufacturers of valuating evidencing systems and entities, such as carriers that perform services on the mail items.

Key management systems differ for public and symmetric key cryptographic schemes. The market generally contains many millions of users that may utilize public key management for the CIVC. Other segments of that market may effectively use symmetric key systems for the CIVC, which can be organized using public key cryptographic systems, such as the Diffie Hellman scheme. In either case, keys have to be generated, installed, maintained and revoked when required in a manner that is secure and economically effective. This means that verifiers that store or have access to symmetrical public verification keys must have the appropriate protection from a key authenticity and a confidentiality point of view.

A system or scheme that satisfies all the above requirements is difficult. Various methods and systems primarily based on approved public standard key cryptographic schemes such as RSA, the Digital Signature Algorithm (DSA) or the Elliptic Curve DSA (ECDSA) have been suggested. The DSA was published by the National Institute of Standards and Technology (NIST) in the Digital Signature Standard (DSS). The DSA is based on the discrete logarithm problem and is a variant of the Schnorr and ElGamal signature algorithms. It is for authentication only.

However, these solutions do not satisfy all the requirements mentioned above. Accordingly, it is an object of the present invention to mitigate at least some of the above disadvantages.

SUMMARY OF THE INVENTION

The present invention seeks to provide a public key signature scheme having an improved public key signature size and which is based on the discrete logarithm problems such as DSA or ECDSA.

In accordance with this invention there is provided a method for generating a digital signature, the method comprising the steps of: generating a short term private key; computing a short term public key derived from the private key; computing a first signature component derived from the short term public key; computing an intermediate signature component derived from the first signature component as a function of the number of bits in a binary representation of the first signature component; computing a second signature component, derived from the short term private key, the message M and the intermediate signature component; and transmitting the second and intermediate signature components as a signature for the M.

In accordance with a further embodiment of the invention the number of bits in the intermediate signature component is selected according to desired security strength for a particular application.

BRIEF DESCRIPTION OF THE DRAWINGS

These and other features of the preferred embodiments of the invention will become more apparent in the following detailed description in which reference is made to the appended drawings wherein:

Figure 1 is a schematic diagram of a digital postage system according to an embodiment of the present invention; and
Figure 2 is a schematic diagram of a signature scheme according to an embodiment of the present invention.

DESCRIPTION OF THE PREFERRED EMBODIMENTS

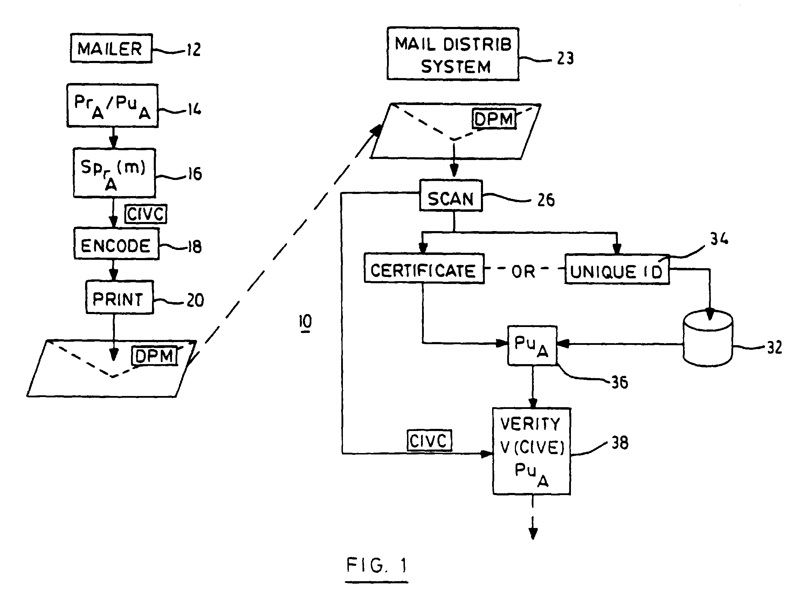

Referring to figure 1, a schematic diagram of a generalized embodiment of the present invention is shown generally by numeral 10. The system uses a public key cryptographic scheme wherein the CIVC is a digital signature contained in the DPM. A mailer 12 has a private key $Pr_A$ and a corresponding public key $PU_A$. The mailer 12 signs a message M using its private key to generate the CIVC or digital signature 16 which is then encoded 18 into the DPM and printed on the mail item 22. The mail item 22 is then dropped into the carrier distribution system wherein the DPM is verified for payment at a mail processing center 23 and then forwarded on to a destination. The verifier 23 has access to the mailers authentic public key 36, which matches the mailers private key, which in turn has been used to sign the message requiring protection. Authentication of the public key $Pu_A$ is accomplished by public key certificates which contain the public key together with a digital signature of the public key. (This signature is normally computed using a private key of a trusted third party such as a certification authority CA, which provides explicit authentication of the public key that must be used to verify the authenticity and data integrity of the DPM). The certificate may be included in the DPM itself or stored in a database 32 accessible to the verifier and referenced by a unique certificate identification code 34. This identification code is typically a unique identification number of the device or process, which was used to compute the CIVC and the DPM. Alternatively, if the certificate is contained in the DPM, the public key is extracted from the certificate and used to verify the signature on M 38.

For the digital postage environment, it seems likely that most standards which evolve for DPM will specify RSA, the DSS or the ECDSA as the signature mechanism even though the Nyberg-Rueppel variant is computationally and bandwidth more efficient.

Implementation of the DSS or ECDSA in the DPM may save bandwidth by adopting a scheme in accordance with the present invention. The scheme of the present invention is not a true DSS or ECDSA but is close enough that for the application it may be acceptable.

It is assumed that each entity (mailer, postal processing system, CA) participating in the system, has been initialized with the system parameters of the public key scheme being used. The system parameters for the following embodiment are an elliptic curve point P of prime order n in $E(F_q)$, and E is an elliptic curve defined over the field $F_q$. Additionally, at least the signing entity 12 is initialized with public and private keys i.e long term private and public key pairs (d, dP) respectively.

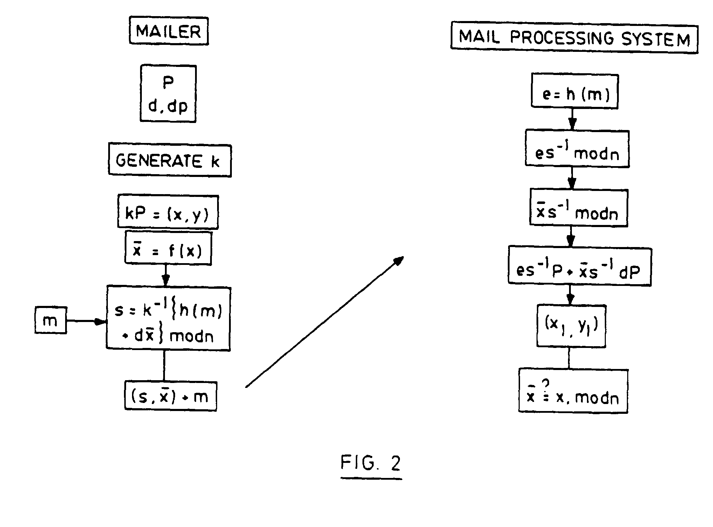

Referring now to figure 2 as an exemplary embodiment of the invention, a DSA scheme will be described.

By way of background, the ECDSA essentially works as follows:

an entity generates a statistically unique and unpredictable integer $k$ in the interval [2, n-2] and computes $kP = (x,y)$;
the entity then computes a signature
$s = k^{-1}\{h(m) + dx\} \bmod n$, where h(m) is a hash (eg. SHA-1) on message m, and transmits the signature pair $(s,x)$. In the mail application, the signature pair (s, x) is encoded into the DPM and then applied to the mail item. The DPM may also contain either e(m) or m.

Assuming the order n of the elliptic curve is approximately 163 bits long, then the signature is roughly 42 bytes long (i.e. $s$ and $x \cong 21$ bytes). Given, the DPM application there appears to be no need to use such a large value of signature $x$. Instead, we may derive from $x$, an $\bar{x}$ which is much smaller, perhaps as small as 1/4 the number bits of $x \cong 6$ bytes. Ultimately, the size of $\bar{x}$ will depend on the risk model used. Thus, the new signing equation will be

$$s = k^{-1}\{h(m) + d\bar{x}\} \bmod n$$

where $d$ is once again the private key of the signor. The signor now sends the components $(s, \bar{x})$.

To verify the signature the verifier computes $e = h(m)$; $es^{-1}$; $\bar{x} s^{-1}$.

The verifier then computes $es^{-1}P + \bar{x} s^{-1}dP$ and verifies whether the x-coordinate is equal to $\bar{x}$. That is, the verifier knows the public key $Pu_A = dP$ of the signor (determined via a certificate in the DPM or via a lookup table). Thus, the computation of $\bar{x}s^{-1}$ is faster and less area is occupied on a DPM with the shorter $\bar{x}$.

It must be determined whether an adversary could forge signatures. Assume an adversary entity Eve could randomly select an $\bar{x}$, then Eve could try various choices for $s$ in the following expression:

$$s^{-1}h(m)P + s^{-1}\bar{x}Q_A = (u,v)$$

where $Q_A$ is the public key of the entity whose signature is to be forged.

If Eve derives, $\bar{u}$ from $u$ in the same manner as $\bar{x}$ was derived from $x$ and $\bar{u} = \bar{x}$, then Eve has successfully forged Alice's signature $(s, \bar{x})$ on the message $m$.

The amount of work computationally to do this is approximately $2^{|\bar{x}|}$ choices for $s$ where $|\bar{x}|$ is the number of bits in $\bar{s}$. This approach does not compromise the private key $d$ no matter how small $\bar{x}$ is taken.

Suppose that $\bar{x}$ is taken to be 40 bits. Then, to forge one DPM will require about $2^{40} \cong 10^{12}$ computations with different $s$ value. This is a lot of work for one mail piece.

Another important feature of the above method is its use with the Nyberg-Rueppel (NR) variant instead of the ECDSA.

In this instance, significant computational efficiencies are obtained during the verification process. A digital signature can be verified at approximately 4 times faster if

$$|\bar{x}| = \frac{1}{4}|x|,$$

that is the number of bits in $\bar{x}$ is one quarter the number of bits in x.

In the NR scheme, the signor selects a statistically unique and unpredictable integer r such that $0 < r < q$ and a value $n = g^{-r} \bmod p$ is computed where p and q are primes, q divides p-1 and g is an element of order q in Fp. A first signature component p is computed from $e = x u \bmod p$ and a second signature component $y = r + de \bmod q$, where once again d is the signor's private key. The signor sends the signature components (e,y).

However, in the present application an intermediate signature component $\bar{e}$ is derived from e, that is significantly smaller than e. The value $\bar{e}$ is then used to compute y to derive the signature components $(\bar{e}, y)$. The verifier computes $x = u^{-1} \bar{e} \bmod p$, where $u^{-1} = g^y k^e \bmod p$ and k is the public key of the signor. In this scheme $\bar{e}$ is used twice in the verification thus, significant computation savings can be achieved.

Although the invention has been described with reference to certain specific embodiments, various modifications thereof will be apparent to those skilled in the art without departing from the spirit and scope of the invention as outlined in the claims appended hereto.

**Claims**

1. A method for generating a digital signature, said method comprising the steps of:

   (a) generating a short term private key;
   (b) computing a short term public key derived from said private key;
   (c) computing a first signature component derived from said short term public key;
   (d) computing an intermediate signature component derived from said first signature component as a function of the number of bits in a binary representation of the first signature component;
   (e) computing a second signature component, derived from said short term private key, said message M and said intermediate signature component; and
   (f) transmitting said second and intermediate signature components as a signature for said M.

2. A method as defined in claim 1, the number of bits in the intermediate signature component is selected according to desired security strength for a particular application.

3. A method as defined in claim 1, including the step of encoding said signature components into a digital postage mark.

4. A method as defined in claim 3, including the step of applying said digital postage mark to a mail item.

5. A method for verifying a digital signature, said method comprising the steps of receiving a digital signature having a second and intermediate signature component said components being generated by the steps of:

   (a) generating a short term private key;
   (b) computing a short term public key derived from said private key;
   (c) computing a first signature component derived from said short term public key;
   (d) computing an intermediate signature component derived from said first signature component as a function of the number of bits in a binary representation of the first signature component;
   (e) computing a second signature component, derived from said short term private key, said message M and said intermediate signature component; and
   (f) transmitting said second and intermediate signature components as a signature for said M.

6. An article of manufacture comprising:

   (a) a computer usable medium having computer readable program code embodied therein for generating a digital signature; the computer readable program code in said article of manufacture comprising;
   (b) computer readable program code configured to cause a computer to generate a short term private key;
   (c) computer readable program code configured to cause a computer to compute a short term public key derived from said private key;
   (d) computer readable program code configured to cause a computer to compute a first signature component derived from said short term public key;
   (e) computer readable program code configured to cause a computer to compute an intermediate signature component derived from said first signature component as a function of the number of bits in a binary representation of the first signature component;
   (f) computer readable program code configured to cause a computer to compute a second signature component, derived from said short term private key, said message M and said intermediate signature component; and
   (g) computer readable program code configured to cause a computer to publish said second and intermediate signature components as a signature for said message M.

7. A method for communicating a message between a pair of correspondents in a communication system, said method comprising the steps of:

   (a) determining a risk model for said system;
   (b) applying said risk model to a signature scheme for said system to determine modified signature scheme; and
   (c) applying said modified signature scheme to communication of messages between said correspondents.

FIG. 1

MAILER

$$P$$
$$d, dp$$

GENERATE k

$$kP = (x, y)$$

$$\bar{x} = f(x)$$

$$m \rightarrow s = k^{-1}\{h(m) + d\bar{x}\} \bmod n$$

$$(s, \bar{x}) + m$$

MAIL PROCESSING SYSTEM

$$e = h(m)$$

$$es^{-1} \bmod n$$

$$\bar{x}s^{-1} \bmod n$$

$$es^{-1}P + \bar{x}s^{-1}dP$$

$$(x_1, y_1)$$

$$\bar{x} \overset{?}{=} x_1 \bmod n$$

FIG. 2